# EUROPEAN PATENT APPLICATION

(11) **EP 3 742 621 A1**
(43) Date of publication of application: **25.11.2020**
(21) Application number: 19741269.5
(22) Date of filing: 18.01.2019
(51) Int. Cl.: H04B 1/40

(54) **MICROWAVE BROADBAND DUPLEXER AND MICROWAVE TRANSCEIVER APPARATUS**

(30) Priority: 18.01.2018 CN 201810048030
(71) Applicant: ZTE Corporation, Shenzhen, Guangdong 518057 (CN)
(72) Inventor: ZHANG, Yong, Shenzhen, Guangdong 518057 (CN)
(74) Representative: Petraz, Gilberto Luigi
(86) International application number: PCT/CN2019/072334
(87) International publication number: WO 2019/141236

(57) **Abstract**

Disclosed are a microwave broadband duplexer and a microwave transceiver apparatus, the microwave transceiver apparatus includes the microwave broadband duplexer, a microwave transmission unit and a microwave reception unit, the microwave broadband duplexer includes a circulator, a broadband transmission branch filter and a broadband reception branch filter, the circulator is connected to the broadband transmission branch filter and the broadband reception branch filter, the broadband transmission branch filter is connected to the microwave transmission unit, the broadband reception branch filter is connected to the microwave reception unit, the microwave transmission unit includes a microwave transmission band-pass filter set, which includes a routing module and at least two band-pass filters, the routing module is respectively connected to the at least two band-pass filters and selects one of the at least two band-pass filters to operate.

## Description

### Cross-reference to Related Applications

This application claims the priority of Chinese patent application CN 201810048030.8 filed with the Patent Office of the People's Republic of China on January 18, 2018, the entirety of which is incorporated herein by reference.

### Field of the Invention

The present application relates to, but is not limited to, the technical field of communication technology, for example, to a microwave broadband duplexer and a microwave transceiver apparatus.

### Background of the Invention

Microwave bands mainly refer to division of various microwave frequency ranges for fixed wireless systems, as defined by the ITU (International Telecommunication Union) (the Recommendations ITU-R (International Telecommunication Union-Radio Communication Sector) F, and other divisions of microwave frequency ranges based on these recommendations, such as divisions of various frequency ranges referenced in the European standard ETSI EN302 217), but not limited to this, or other similar divisions of frequency ranges for fixed wireless systems. These microwave bands mainly include frequency bands above 6 GHz up to millimeter waves, and are mainly used for fixed wireless systems such as point-to-point microwave communications. Based on the Recommendations ITU-R F, channels with narrower bandwidths are further defined within these microwave bands. For example, the Recommendation ITU-R F. 636 defines a 15 GHz (14.4-15.3 GHz, i.e., 14400-15350 MHz) band within which a plurality of narrower channels with different bandwidths, for example, 56 MHz, 40 MHz, 28 MHz or 14 MHz, are continuously defined.

In order to realize frequency division duplexing (FDD), each microwave band is divided into a reception band (Rx band) and a transmission band (Tx band) by the ITU-R, so that a receiver and transmitter of an apparatus can work bidirectionally at different frequencies at the same time (it should be noted that, since the communication is bidirectional, there must be another reception band and transmission band in the microwave band which are opposite to and match the above reception band and transmission band, i.e., a transmission band and reception band of an apparatus are a reception band and transmission band of a communication target (another apparatus) of the apparatus, and the transmission bands and reception bands of the two apparatuses are interchanged). The frequency space between a reception channel and a transmission channel within an apparatus is called duplex space (TR space), which is defined in the Recommendations ITU-R. For example, the Recommendation ITU-R F.636 defines a 15GHz band, in which a transmission band is 14.4-14.860 GHz, a reception band is 14.890-15.350GHz, and a duplex space is 490 MHz (which is equal to 14.890-14.4 GHz and which is also equal to 15.350-14.860 GHz). Accordingly, the Recommendation ITU-R F.636 can certainly define frequency bands in another opposite way, namely, in the same 15GHz frequency band , a transmission band is 14.890-15.350 GHz, a reception band is 14.4-14.860 GHz, and a duplex space is 490 MHz.

Apparatus manufacturers divide a plurality of pairs of reception and transmission sub-bands in reception and transmission bands of a microwave band, and each pair of reception and transmission sub-bands can cover several pairs (not all) of reception and transmission channels. If each pair of reception and transmission sub-bands corresponds to pass bands of reception and transmission branch filters of a duplexer, the duplexer is called sub-band duplexer. One microwave transceiver includes only one duplexer. Compared with the reception and transmission bands, the divided reception and transmission sub-bands are narrowband. When a microwave transceiver is working, only a pair of reception and transmission channels in a current reception/transmission sub-band can be selected. If channels in other sub-bands are to be selected, one can only replace the apparatus. As a result, there are many types of transceivers, and the production and management of transceivers are complicated. In addition, although software full sub-band microwave transceivers can currently be used to achieve complete coverage of a reception/transmission band, such transceivers have a complicated manufacturing process, low reliability and low cost performance.

### Summary of the Invention

The following is a summary of the subject matter described in detail herein. This summary is not intended to limit the scope of the claims.

An embodiment of the present application provides a microwave broadband duplexer and a microwave transceiver apparatus, which can reduce types of microwave transceiver apparatuses and ensure the productivity, reliability and performance indexes of microwave transceiver apparatuses.

In a first aspect, an embodiment of the present application provides a microwave broadband duplexer including, a circulator, a broadband transmission branch filter, and a broadband reception branch filter. The circulator is connected to the broadband transmission branch filter and the broadband reception branch filter. The broadband transmission branch filter is connected to a microwave transmission unit, and the broadband reception branch filter is connected to a microwave reception unit. The microwave transmission unit includes a microwave transmission band-pass filter set, the microwave transmission band-pass filter set including a routing module and at least two band-pass filters, the routing module being respectively connected to the at least two band-pass filters and selecting one band-pass filter to operate.

In a second aspect, an embodiment of the present application provides a microwave transceiver apparatus, including a microwave broadband duplexer, a microwave transmission unit, and a microwave reception unit. The microwave broadband duplexer includes a circulator, a broadband transmission branch filter, and a broadband reception branch filter. The circulator is connected to the broadband transmission branch filter and the broadband reception branch filter. The broadband transmission branch filter is connected to the microwave transmission unit, and the broadband reception branch filter is connected to the microwave reception unit. The microwave transmission unit includes a microwave transmission band-pass filter set, the microwave transmission band-pass filter set including a routing module and at least two band-pass filters, the routing module being respectively connected to the at least two band-pass filters and selecting one band-pass filter to operate.

After reading and understanding the drawings and detailed description, other aspects can be understood.

### Brief Description of the Drawings

Fig. 1 is a schematic diagram of a structure of a conventional microwave transceiver with a sub-band duplexer;
Fig. 2 is a schematic diagram of a structure of the sub-band duplexer in Fig. 1;
Fig. 3 is a schematic diagram of bands covered by a plurality of sub-band duplexers;
Fig. 4 is a schematic diagram of a structure of a software full sub-band microwave transceiver;
Fig. 5 is a schematic diagram of a structure of a software full sub-band duplexer in Fig. 4;
Fig. 6 is a schematic diagram of bands covered by one software full sub-band duplexer;
Fig. 7 is a schematic diagram of a microwave transceiver provided by an embodiment of the present application;
Fig. 8 is a schematic diagram of a flow of signals of a microwave transceiver provided by an embodiment of the present application;
Fig. 9 is a schematic diagram of a structure of a microwave broadband duplexer provided by an embodiment of the present application;
Fig. 10 is a schematic diagram of a connection structure of a circulator and broadband branch filters of a microwave broadband duplexer provided by an embodiment of the present application;
Fig. 11 is a schematic diagram of bands covered by one microwave broadband duplexer provided by an embodiment of the present application;
Fig. 12 is a diagram comparing a reception-transmission isolation of a narrowband duplexer with a reception-transmission isolation of a broadband duplexer;
Fig. 13 is a schematic diagram of a microwave transmission band-pass filter set provided by an embodiment of the present application;
Fig. 14 is a schematic diagram of transmission bands covered by a microwave transmission band-pass filter set of an embodiment of the present application;
Fig. 15 is a schematic diagram of Example one of the present application;
Fig. 16 is a schematic diagram of Example two of the present application;
Fig. 17 is a schematic diagram of Example three of the present application;
Fig. 18 is a schematic diagram of a microwave transmission band-pass filter set in Example three of the present application; and
Fig. 19 is a schematic diagram of transmission bands covered by the microwave transmission band-pass filter set in Example three of the present application.

### Detailed Description of the Embodiments

The embodiments of the present application will be explained in detail below with reference to the accompanying drawings. It should be understood that the embodiments described below are only used to illustrate and explain the present application, and are not used to limit the present application.

Selection of duplexers in a microwave transceiver is subject to the following two factors.

First, a reception branch filter of a duplexer is sufficient to suppress transmission microwave signals (main transmission signals, which are transmitted to a remote receiver) leaked from a transmission branch pass band of the duplexer, so as to reduce transmission microwave signals transmitted to a receiver.

Second, a transmission branch filter of a duplexer reduces unwanted out-of-band spurious emissions of a transmitter, and in particular, is sufficient to suppress unwanted spurious emissions with frequencies falling within a pass band of a reception branch filter of the duplexer.

The above two requirements reflect the requirement for an isolation between an internal receiver and transmitter of a microwave transceiver and the requirement for external spurious emissions of a microwave transceiver.

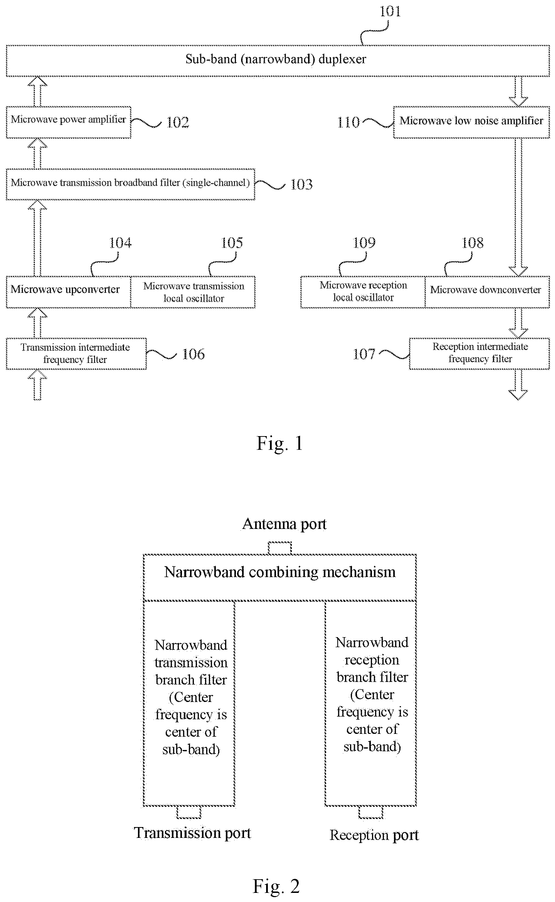

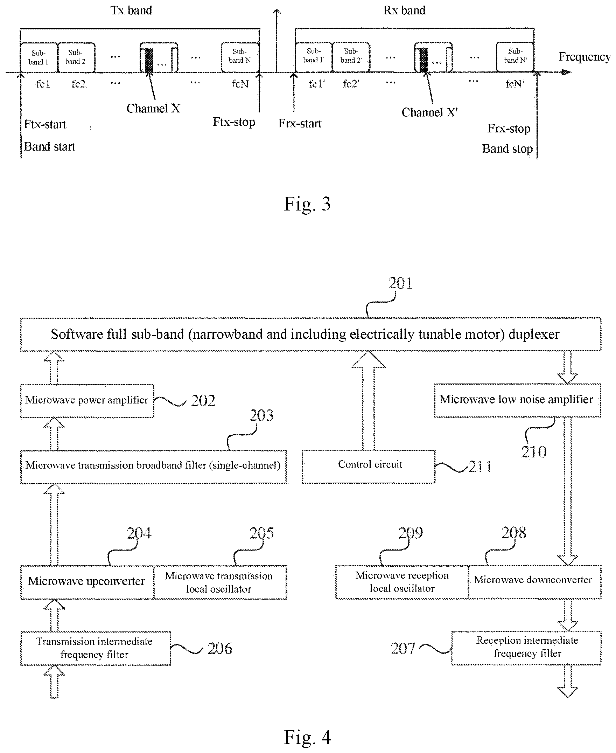

In order to meet the above two requirements, a conventional microwave transceiver shown in Fig. 1 and a software full sub-band microwave transceiver shown in Fig. 4 both use narrowband duplexers. The reasons are as follows. First, reduction of a relative bandwidth of a pass band of a filter can improve an out-of-band suppression at a fixed frequency outside the pass band, so as to enhance a reception-transmission isolation between a receiver and a transmitter. Second, the design difficulty of the transmitter can be reduced, and a good out-of-band suppression of the narrowband duplexer can effectively reduce spurious emissions of the transmitter.

As shown in Fig. 1, the conventional microwave transceiver includes at least the following parts: a sub-band duplexer 101, a microwave power amplifier 102, a microwave transmission broadband filter 103, a microwave upconverter 104, a microwave transmission local oscillator 105, a transmission intermediate frequency filter 106, a reception intermediate frequency filter 107, a microwave downconverter 108, a microwave reception local oscillator 109, and a microwave low noise amplifier 110.

The transmission intermediate frequency filter 106 may be used when an intermediate frequency exists in a transmitter portion of the microwave transceiver. The microwave transmission local oscillator 105 is adapted to provide a transmission microwave local oscillator signal to the microwave upconverter 104. The microwave upconverter 104 is adapted to convert a low-frequency transmission signal into a microwave signal to be transmitted by an antenna. The microwave power amplifier 102 is adapted to amplify a transmission microwave signal filtered by the microwave transmission broadband filter 103, and send the transmission microwave signal to the antenna through the sub-band duplexer 101. The microwave low noise amplifier 110 is adapted to amplify the received microwave signal of the antenna and send same to the microwave downconverter 108. The microwave reception local oscillator 109 is adapted to provide a reception microwave local oscillator signal to the microwave downconverter 108. The microwave downconverter 108 is adapted to downconvert the microwave signal received by the antenna to a low-frequency signal. The reception intermediate frequency filter 107 is adapted to filter an intermediate frequency signal after microwave downconversion.

The conventional microwave transceiver shown in Fig. 1 uses the sub-band duplexer 101. Each pair of reception and transmission sub-bands divided in a reception/transmission band of a microwave band can cover several (not all) pairs of reception and transmission channels. The divided reception and transmission sub-bands are narrowband in relative to the reception and transmission bands. When the microwave transceiver is working, only a pair of reception and transmission channels in the current reception and transmission sub-bands can be selected. If channels in other sub-bands are to be selected, one can only replace the apparatus. Therefore, for one microwave band, multiple microwave transceivers with different sub-bands are needed to achieve full band coverage. It should be noted that, different from microwave bands, reception/transmission bands (Tx/Rx bands) and reception/transmission channels (Tx/Rx channels) divided by the ITU-R, sub-bands are designed by transceiver manufacturers, and designers hope that each sub-band can include as many channels as possible to reduce the number of sub-bands and types of transceivers.

As shown in Fig. 2, the sub-band duplexer of the conventional microwave transceiver may include a narrowband combining mechanism, a narrowband transmission branch filter, and a narrowband reception branch filter. The narrowband combining mechanism is connected to an antenna through an antenna port, the narrowband transmission branch filter is connected to a transmitter portion through a transmission port, and the narrowband reception branch filter is connected to a receiver portion through a reception port. A center frequency of the narrowband transmission branch filter is a center of a transmission sub-band, and a center frequency of the narrowband reception branch filter is a center of the reception sub-band.

Fig. 3 depicts a case where a plurality of sub-band duplexers cover reception/ transmission bands. As shown in Fig. 3, each microwave band (from a band start to a band stop) specified by the ITU-R F can be divided into a transmission band (Tx band, which is from a transmission band start (Ftx-start) to a transmission band stop (Ftx-stop)) and a reception band (Rx band, which is from a reception band start (Frx-start) to a reception band stop (Frx-stop)). The reception band and the transmission band each contain many channels with a narrower bandwidth specified by the ITU-R.F. Apparatus manufacturers define N pairs of sub-bands in the reception and transmission bands, the N pairs of sub-bands corresponding to N duplexers (i.e., N microwave transceivers), and each sub-band including several channels.

The sub-bands are pass bands of reception and transmission branch filters of the sub-band duplexers, and the sub-bands are used in pairs. A space (e.g., fc1'-fc1, fc2'-fc2, ..., fcN'-fcN) between center frequencies (e.g., fcl and fcl', fc2 and fc2', ..., fcN and fcN') of any pair of sub-bands must satisfy a duplex space of a microwave band specified by the ITU-R.F.

For example, the Recommendation ITU-R F.595 specifies a duplex space of 1010 MHz in an 18 GHz (17.7-19.7 GHz) microwave band recommended by the ITU-R, i.e., a frequency space between a reception sub-band and a transmission sub-band, must satisfy 1010 MHz, i.e., fc1'-fc1=fc2'-fc2=...=fcN'-fcN=1010 MHz; fcl, fc2,..., fcN are in a 17.7-18.7 GHz transmission band; and fcl', fc2', ..., fcN' are in an 18.7-19.7 GHz reception band. If an apparatus manufacturer sets a bandwidth of a divided sub-band to 250 MHz, it means that at least four pairs of sub-bands (with a bandwidth of 1 GHz, N=4), i.e., four sub-band duplexers, are needed for every 1 GHz bandwidth of a reception/transmission band.

As shown in Fig. 4, a software full sub-band microwave transceiver includes at least the following parts: a software full sub-band duplexer 201, a control circuit 211, a microwave power amplifier 202, a microwave transmission broadband filter 203, a microwave upconverter 204, a microwave transmission local oscillator 205, a transmission intermediate frequency filter 206, a reception intermediate frequency filter 207, a microwave downconverter 208, a microwave reception local oscillator 209, and a microwave low noise amplifier 210. The descriptions about the microwave power amplifier 202, the microwave transmission broadband filter 203, the microwave upconverter 204, the microwave transmission local oscillator 205, the transmission intermediate frequency filter 206, the reception intermediate frequency filter 207, the microwave downconverter 208, the microwave reception local oscillator 209, and the microwave low noise amplifier 210 are the same as the descriptions about the corresponding devices in the conventional microwave transceiver, and therefore they will not be repeated here.

As shown in Fig. 4, the software full sub-band duplexer 201 used in the software full sub-band microwave transceiver is a software electrically tunable duplexer, and the pass band of the reception/transmission branch filter thereof is still narrowband; however, by electrically tuning center frequencies of the filters, the reception/transmission pass band can move within the entire reception/transmission band. Although the software full sub-band transceiver can completely cover the reception/transmission band, the electrically tunable duplexer has a complicated manufacturing process, low reliability, high price, and relatively low performance index.

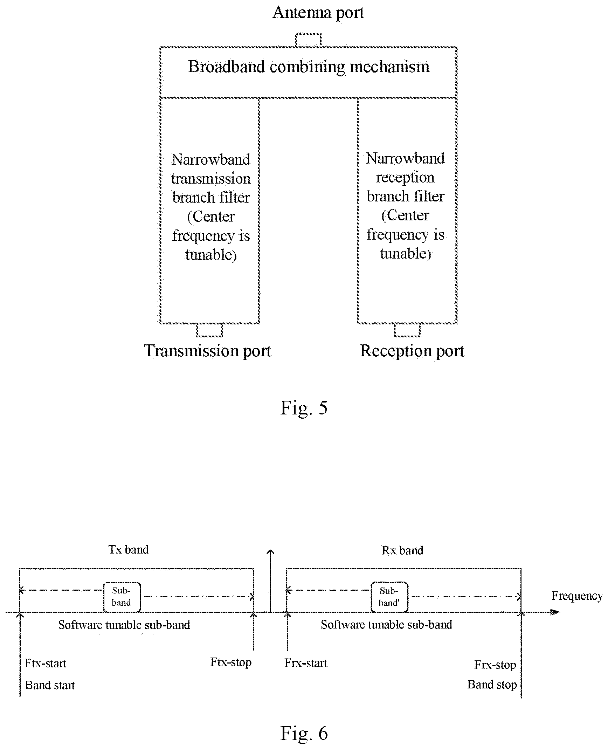

As shown in Fig. 5, the software full sub-band duplexer of the software full sub-band microwave transceiver may include a broadband combining mechanism, a narrowband transmission branch filter, and a narrowband reception branch filter. The broadband combining mechanism is connected to an antenna through an antenna port, the narrowband transmission branch filter is connected to a transmitter portion through a transmission port, and the narrowband reception branch filter is connected to a receiver portion through a reception port. A center frequency of the narrowband transmission branch filter and a center frequency of the narrowband reception branch filter are tunable respectively.

Fig. 6 depicts a case where one software full sub-band (narrowband and including an electrically tunable motor) duplexer covers a reception/transmission band. As shown in Fig. 6, one narrowband duplexer can be used to cover all the sub-bands in Fig. 3 by moving a frequency of a pass band. This is because a center frequency of a reception/transmission sub-band of the narrowband duplexer can be set by software, and a motor is used to electrically tune the narrowband duplexer so that the center frequency can be moved arbitrarily within the reception/transmission band. Therefore, for a software full sub-band duplexer, sub-band division is not needed.

An embodiment of the present application provides a microwave transceiver apparatus, including a microwave broadband duplexer, a microwave transmission unit, and a microwave reception unit. The microwave broadband duplexer includes a circulator, a broadband transmission branch filter, and a broadband reception branch filter. The circulator is connected to the broadband transmission branch filter and the broadband reception branch filter. The broadband transmission branch filter is connected to the microwave transmission unit, and the broadband reception branch filter is connected to the microwave reception unit. The microwave transmission unit includes a microwave transmission band-pass filter set. The microwave transmission band-pass filter set includes a routing module and at least two band-pass filters. The routing module is respectively connected to the at least two band-pass filters and selects one band-pass filter to operate.

The microwave transceiver apparatus provided in the present embodiment can cover most or all of the channels in an entire reception/transmission band in a working microwave band, thereby greatly reducing types of microwave transceiver apparatuses, and ensuring the manufacturability, reliability and performance indexes of the microwave transceiver apparatus.

The microwave transceiver apparatus provided in the present embodiment alone may be a single apparatus, but the present application is not limited thereto. In other embodiments, the microwave transceiver apparatus may be deployed in the form of a transceiver module or unit in an apparatus.

The microwave transmission unit may further include a microwave upconverter and a microwave power amplifier. An output end of the microwave upconverter is connected to an input end of the microwave transmission band-pass filter set, an output end of the microwave transmission band-pass filter set is connected to an input end of the microwave power amplifier, and an output end of the microwave power amplifier is connected to the broadband transmission branch filter. However, the present application is not limited to this. In other embodiments, other microwave devices are also allowed to be provided between any two of the microwave upconverter, the microwave transmission band-pass filter set, and the broadband transmission branch filter, but the order between the three is unchanged.

In an example embodiment, the microwave broadband duplexer may include a circulator, a broadband transmission branch filter, and a broadband reception branch filter which are integrally assembled; alternatively, the microwave broadband duplexer may include a circulator, a broadband transmission branch filter, and a broadband reception branch filter which are separately provided. The circulator may be connected to the broadband transmission branch filter and the broadband reception branch filter through a port or a transmission line, respectively.

In an example embodiment, the circulator may include a first port, a second port, and a third port. The first port is connected to the broadband transmission branch filter, the second port is connected to an antenna, and the third port is connected to the broadband reception branch filter. A signal output from the first port is transmitted to and output form the second port, and a signal input from the second port is transmitted to and output from the third port. The signal transmission direction of the circulator is as follows: signals can only be transmitted from the first port to the second port, and transmitted from the second port to the third port. For a reverse transmission, there is an isolation, i.e., signals cannot be reversely transmitted. In this way, by providing the circulator, an isolation between the reception branch and the transmission branch can be increased.

In an example embodiment, a pass band of the broadband transmission branch filter may cover a bandwidth greater than a preset ratio in a transmission band of a microwave band, and a pass band of the broadband reception branch filter may cover a bandwidth greater than a preset ratio in a reception band of the microwave band. Illustratively, a value of the preset ratio may be greater than or equal to 60% and less than 100%. For example, the preset ratio may be 60%, 70%, 99%, etc. In this way, one microwave transceiver apparatus provided in the present embodiment can replace a plurality of microwave transceivers with sub-band duplexers in the reception/transmission band of the microwave band, thereby reducing the number of sub-bands and types of transceivers. It should be noted that, in the present embodiment, "more than a preset ratio" means that the preset ratio may be included.

In an example embodiment, the pass band of the broadband transmission branch filter may cover the transmission band of the microwave band, and the pass band of the broadband reception branch filter may cover the reception band of the microwave band. The microwave transceiver apparatus provided in the present embodiment is a full sub-band microwave transceiver apparatus, which can cover the entire reception/transmission band. In this way, one microwave transceiver apparatus provided in the present embodiment can replace all conventional microwave transceivers with sub-band duplexers in a reception/transmission band of a microwave band, thereby greatly reducing types of apparatuses.

In an example embodiment, the routing module may include a first routing unit and a second routing unit. The first routing unit is connected to input ends of at least two band-pass filters, and the second routing unit is connected to output ends of the at least two band-pass filters.

In an example embodiment, the first routing unit may include one of a multi-selection switch, a combination of single-pole-double-throw (SPDT) switches, and a splitter, and the second routing unit may include one of a multi-selection switch and a combination of SPDT switches.

Illustratively, the first routing unit may be a multi-selection switch, the second routing unit may be a multi-selection switch, and the first routing unit and the second routing unit cooperate to select the same band-pass filter for normal operation. Illustratively, the first routing unit may be a splitter, the second routing unit may be a multi-selection switch, and the second routing unit selects one band-pass filter for normal operation. However, the present application is not limited to this.

In an example embodiment, a pass band of each band-pass filter covers at least one channel in a transmission band of a microwave band, and pass bands of the microwave transmission band-pass filter set cover the transmission band of the microwave band. All the band-pass filters of the microwave transmission band-pass filter set may be present in a single apparatus at the same time, so that they can cooperate with a non-tunable microwave broadband duplexer to cover the entire reception/transmission band in the microwave band or cover a bandwidth greater than a preset ratio in the reception/transmission band.

In the present embodiment, each sub-band can include as many channels as possible, thereby reducing the number of sub-bands and types of microwave transceivers. Illustratively, in a working microwave band, one apparatus can cover an entire reception/transmission band, i.e., one device can cover all channels in the reception/transmission band specified by the ITU-R. In this case, it can be considered that the microwave transceiver apparatus has only a pair of sub-bands or has no division of sub-bands (i.e., the reception/transmission sub-band is equivalent to the reception/transmission band). Thus, there are only apparatuses of the same model for each reception/transmission band, which is of great significance for simplifying the complex raw material procurement, process flow, assembly test, ordering, shipping, engineering installation, spare parts and maintenance of products. Illustratively, in a working microwave band, one apparatus can cover more than a bandwidth greater than a preset ratio in a reception/transmission band, for example, cover a plurality of sub-bands instead of all sub-bands, i.e., the device does not cover the entire reception/transmission band, but compared with conventional microwave transceivers, the number of sub-bands and types of transceivers are reduced.

In the following description, the microwave transceiver apparatus is exemplarily illustrated as a single apparatus. That is to say, the microwave transceiver apparatus is exemplarily illustrated as a microwave transceiver.

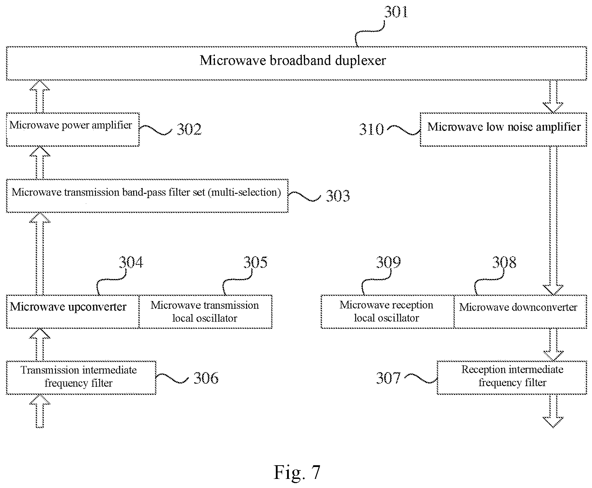

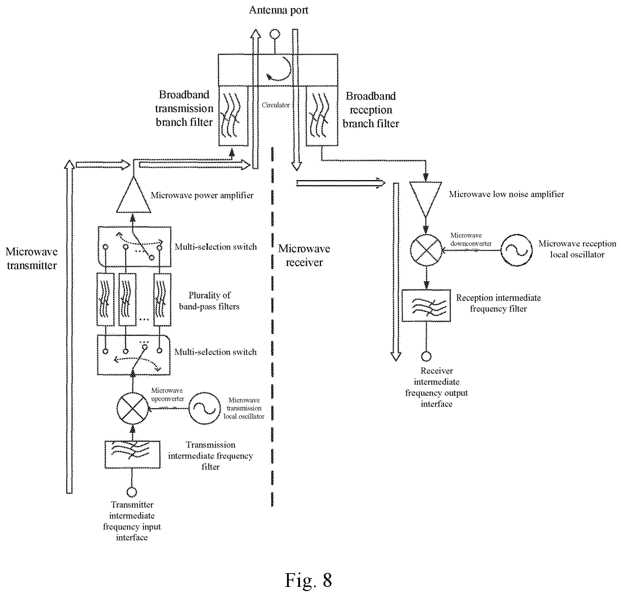

Fig. 7 is a schematic diagram of a microwave transceiver provided by an embodiment of the present application. Fig. 8 is a schematic diagram of a flow of signals of a microwave transceiver provided by an embodiment of the present application. As shown in Figs. 7 and 8, the microwave transceiver provided in present embodiment includes the following parts: a microwave broadband duplexer 301, a microwave transmitter (corresponding to the above microwave transmission unit), and a microwave receiver (corresponding to the above microwave reception unit).

As shown in Fig. 7, the microwave transmitter may include at least the following parts: a microwave power amplifier 302, a microwave transmission band-pass filter set 303, a microwave upconverter 304, a microwave transmission local oscillator 305, and a transmission intermediate frequency filter 306; and the microwave receiver may include at least the following parts: a reception intermediate frequency filter 307, a microwave downconverter 308, a microwave reception local oscillator 309, and a microwave low noise amplifier 310.

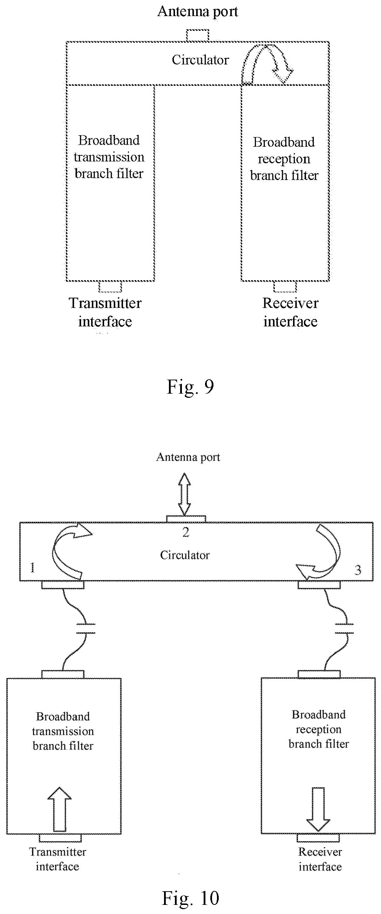

As shown in Figs. 8 and 9, the microwave broadband duplexer includes a circulator, a broadband transmission branch filter, and a broadband reception branch filter. The microwave broadband duplexer is a three port device, one port thereof being connected to an antenna, and the other two ports thereof being respectively connected to the microwave transmitter and the microwave receiver.

In the present embodiment, the microwave broadband duplexer may be a full sub-band duplexer. That is to say, a pass band of a broadband transmission branch filter may cover (greater than or equal to) a transmission band, and a passband of a broadband reception branch filter may cover (greater than or equal to) a reception band. However, the present application is not limited to this. In other embodiments, the pass band of the broadband transmission branch filter may cover a bandwidth greater than a preset ratio in the transmission band, and the pass band of the broadband reception branch filter may cover a bandwidth greater than a preset ratio in the reception band. Illustratively, a value of the preset ratio may be greater than or equal to 60% and less than 100%. In this case, compared with a conventional microwave transceiver, the microwave transceiver provided in the present embodiment may replace a plurality of conventional microwave transceivers, thereby reducing the number of sub-bands and types of transceivers.

In the present embodiment, the circulator, the broadband transmission branch filter and the broadband reception branch filter may be assembled in an integrated manner. That is to say, the circulator, the broadband transmission branch filter, and the broadband reception branch filter may be assembled, combined and debugged first, so as to be present in the form of a duplexer entity. Alternatively, the circulator, the broadband transmission branch filter, and the broadband reception branch filter may be directly connected through ports. Alternatively, the circulator, the broadband transmission branch filter, and the broadband reception branch filter may also be flexibly distributed in the form of three entities in different positions in the microwave transceiver and connected through transmission lines, such as microstrips, coaxial lines or waveguides, to realize the function of a duplexer, so as to bringing convenience to the structural design of the single apparatus.

In the present embodiment, the circulator is a three port device, one port thereof being configured as an antenna port, and the other two ports thereof being respectively connected to the broadband transmission branch filter and the broadband reception branch filter. As shown in Fig. 10, the circulator includes three ports. Port 2 is an antenna port and is configured to interface with an antenna, port 1 is configured to be connected to the broadband transmission branch filter, and port 3 is configured to be connected to the broadband reception branch filter. The signal transmission direction of the circulator is clockwise, and signals can only be transmitted from port 1 to port 2 and output from port 2 to port 3. There is a reverse isolation between the ports of the circulator, i.e., signals cannot be transmitted from port 1 to port 3, from port 2 to port 1, and from port 3 to port 2. Thus, in Fig. 10, when port 2 of the circulator is defined as an antenna port, port 1 can only be used on a transmitter side and port 3 can only be used on a receiver side.

In the present embodiment, the reverse isolation between the ports of the circulator provides an additional isolation greater than 20dB between the reception branch and transmission branch of the microwave broadband duplexer (the reception-transmission isolation of the duplexer usually depends on an out-of-band suppression of the reception/transmission branch filter). Compared with a sub-band duplexer, the microwave broadband duplexer of the present embodiment uses a circulator, which increases the isolation between the reception branch and the transmission branch and thus reduces the requirement for the isolation index provided by the reception/transmission branch filter. That is to say, the out-of-band suppression index is allowed to be reduced accordingly, which is conducive to widening the bandwidth of the pass band of the reception/transmission branch filter and increasing the frequency coverage of the duplexer. The greater the isolation of the circulator is, the more advantageous.

In the present embodiment, the microwave broadband duplexer may include, but is not limited to, a waveguide duplexer.

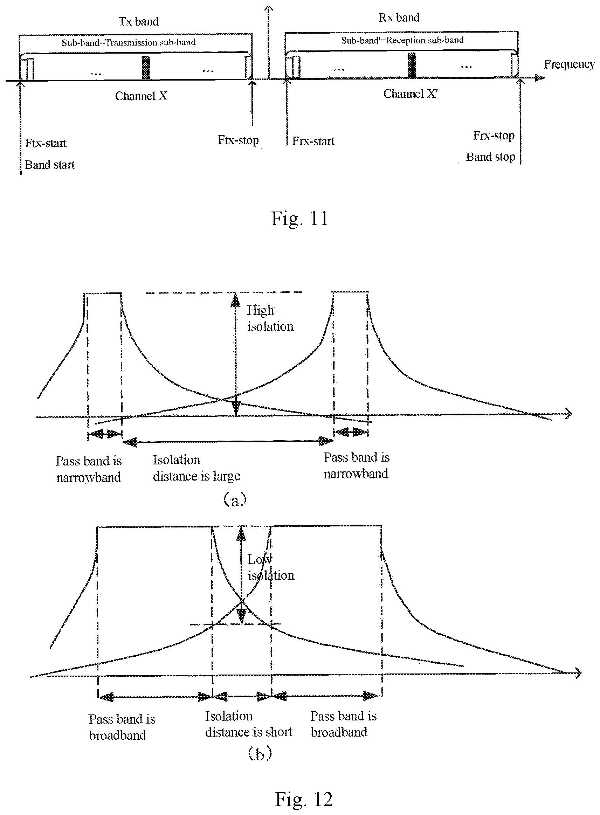

Fig. 11 depicts a case where one microwave broadband duplexer used in Fig. 7 covers a reception/transmission band at a time. As shown in Fig. 11, the reception/transmission branch filter of the microwave broadband duplexer is broadband, and may cover all sub-bands. In the reception/transmission band, a transmission frequency and a reception frequency are set according to selected channels and a duplex space (a frequency space between channel X' and channel X is equal to the duplex space). In Fig. 11, only one microwave broadband duplexer is used, which does not need software tuning and is simple and reliable. However, the use of broadband filters results in reduction in out-of-band suppression (i.e., reception-transmission isolation). Fig. 12 depicts deterioration in out-of-band suppression (reception-transmission isolation) caused by changing a narrowband duplexer into a broadband duplexer. When a pass band of a duplexer is changed from narrow to broad, a distance between the edges of reception and transmission pass bands is shortened, so that an isolation (out-of-band suppression) between the reception branch filter and transmission branch filter of the duplexer is greatly reduced. It can be seen from Fig. 12(a) that an isolation between the reception and transmission branch filters of the narrowband duplexer is high. As shown in Fig. 12(b), an isolation between the reception and transmission branch filters of the broadband duplexer is low.

In the present embodiment, in order to compensate for the reduction in transmission-reception isolation caused by broadband filters used in the broadband duplexer, a microwave transmission band-pass filter set formed by a plurality of narrowband band-pass filters is used in the microwave transmitter so as to improve an out-of-band suppression.

In the present embodiment, as shown in Fig. 8, the microwave transmission band-pass filter set may include at least two band-pass filters disposed in parallel, and two multiple-selection switches. The two multiple-selection switches select one of the band-pass filters to operate. The microwave transmission band-pass filter set is located between the microwave upconverter and microwave power amplifier of the microwave transmitter. Pass bands of the respective band-pass filters cover different frequencies, each of the band-pass filters covers a plurality of transmission channels, and all the band-pass filters may collectively cover the entire transmission band. When the microwave transceiver is working, software may control, according to a transmission channel set by a user, the two multiple-selection switches to select one band-pass filter. The bandwidth of the microwave transmission broadband filter in the conventional microwave transceiver is not less than the transmission band. In the present embodiment, changing the microwave transmission band-pass filter from broadband to narrowband means that the out-of-band suppression of the transmitter is improved and the out-of-band spurious emissions thereof is reduced, which further reduces the requirement for the out-of-band suppression of the microwave duplexer.

By means of the multiple selection of the microwave transmission band-pass filter set of the present embodiment, the bandwidth of the transmitter is reduced from an original entire transmission band to a newly defined, similar sub-band (including more transmission channels). All the band-pass filters of the microwave transmission band-pass filter set may be present in a single apparatus at the same time; however, this is not suitable for the sub-band duplexer in Fig. 1. Therefore, the microwave transceiver provided in the present embodiment can cover the entire reception/transmission band of the microwave band by the combination of the microwave broadband duplexer and the microwave transmission band-pass filter set.

In the present embodiment, the band-pass filters in the microwave transmission band-pass filter set may include, but are not limited to, conventionally used microstrip filters.

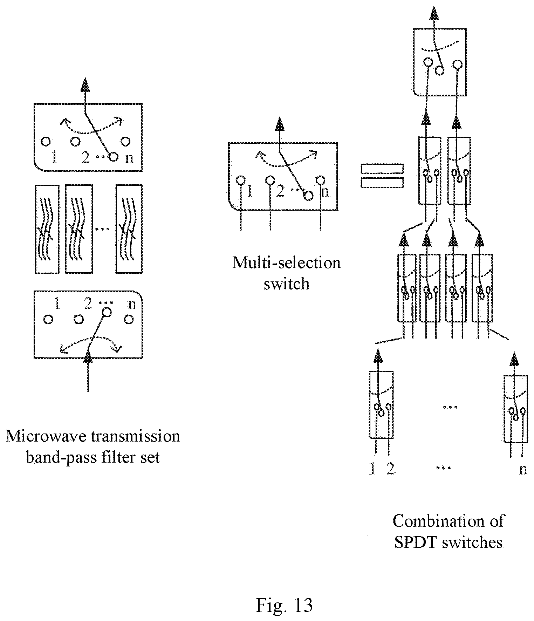

Fig. 13 depicts a schematic diagram of a microwave transmission band-pass filter set. As shown in Fig. 13, multiple-selection switches are used at both input ends and output ends of n (n being an integer greater than or equal to 2) parallel band-pass filters, and the two multiple-selection switches must simultaneously select the same band-pass filter so that the microwave transmitter can operate properly. In this example, the n band-pass filters may cover an entire transmission band. In this example, according to a frequency of a transmission channel input by a user, internal software of the microwave transceiver may control the multiple-selection switches to select a certain unique band-pass filter. As long as the transmission frequency remains unchanged, the band-pass filters will not be reselected. A trigger mode of the multiple-selection switches is not limited in the present embodiment.

Illustratively, as can be seen in the right diagram of Fig. 13, when n is greater than 2, the multiple-selection switches may also be a combination of SPDT switches. Illustratively, when n is 2, SPDT switches may be used. Illustratively, the band-pass filters may be filters in the form of printed circuit board (PCB) microstrips.

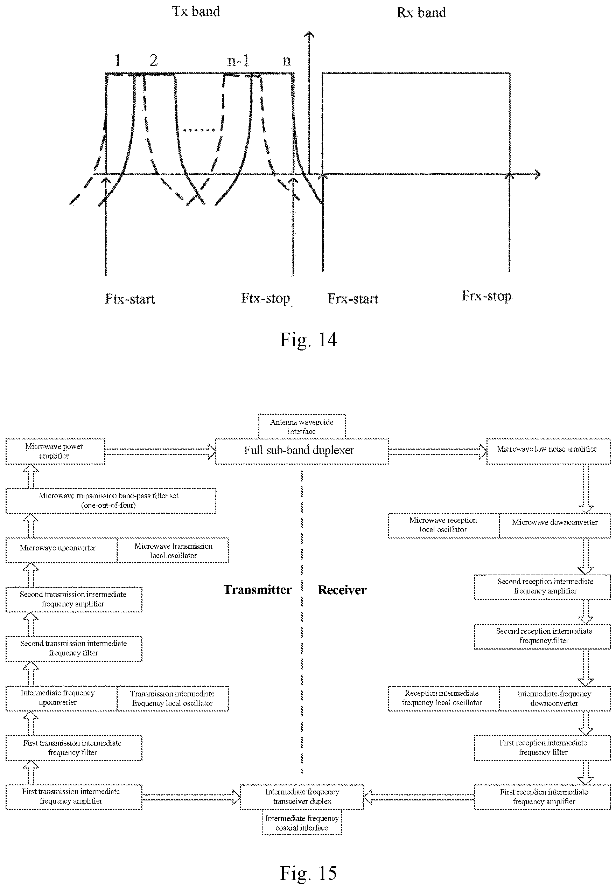

Fig. 14 depicts a case where n band-pass filters cover a transmission band. As shown in Fig. 14, there must be an overlap between pass bands of every two band-pass filters to ensure seamless coverage. In the present embodiment, a plurality of narrowband transmission filters are provided, and one of them is used so as to narrow the bandwidth of the transmitter, thereby improving an out-of-band suppression.

As shown in Figs. 7 and 8, in the present embodiment, the microwave power amplifier is configured to amplify, at the end of the microwave transmitter, a transmission microwave signal filtered by the microwave transmission band-pass filter set, and then transmit the transmission microwave signal to the antenna through the microwave broadband duplexer. The microwave upconverter is configured to convert a low-frequency transmission signal into a signal with a transmission microwave frequency to be transmitted by the antenna. The microwave transmission local oscillator is configured to set a transmission microwave local oscillation frequency and output a transmission microwave local oscillation signal to the microwave upconverter. At least one transmission intermediate frequency filter may be provided upstream of the microwave upconverter. When intermediate frequencies are used in the microwave transmitter, a transmission intermediate frequency filter is used, while in the case of zero intermediate frequency, a baseband filter may be used. The transmission intermediate frequency filter may include, but is not limited to, a conventionally used dielectric (ceramic) filter. The transmission intermediate frequency filter may be used to further suppress out-of-band spurious emission signals of the transmitter to reduce the requirement for the isolation of the duplexer and reduce the interference of the transmitter to the receiver. In addition, lower noise devices may be used in the transmitter to reduce noise output.

As shown in Figs. 7 and 8, in the present embodiment, the microwave low noise amplifier is configured to amplify a received microwave signal of the antenna and send same to the microwave downconverter. The microwave downconverter is configured to convert the microwave signal received by the antenna into a low-frequency signal. The microwave reception local oscillator is configured to set a reception microwave local oscillation frequency and output a reception microwave local oscillation signal to the microwave downconverter. At least one reception intermediate frequency filter may be provided downstream of the microwave downconverter. The reception intermediate frequency filter is configured to filter the intermediate-frequency signal after microwave downconversion. The reception intermediate frequency filter may include, but is not limited to, a conventionally used dielectric (ceramic) filter. The reception intermediate frequency filter may be used to further suppress microwave signals leaked from the transmitter to reduce the requirement for the isolation of the duplexer.

It should be noted that, regardless of whether primary intermediate frequency or multiple intermediate frequencies is used in a microwave transceiver, intermediate frequency filters may be added to different portions of an intermediate frequency circuit as required. A bandwidth of an intermediate frequency filter may be designed to be very narrow, so that an out-of-band suppression may be designed to be relatively high. Typical intermediate frequency filters may include ceramic filters, crystal filters, LC filters, etc.

In the present embodiment, coverage of the reception/transmission band is achieved by a combined structure of the non-tunable microwave broadband duplexer and the microwave transmission band-pass filter set. Although a band-pass filter in the microwave transmission band-pass filter set during operation is narrowband, multiple band-pass filters may be present in a single apparatus. Thus, only by selecting a band-pass filter through a routing module (for example, multiple-selection switches) and without replacement of apparatuses, the transmitter can still operate at any frequency of the transmission band, and the original characteristic that frequency selection is performed in the bandwidth of the transmission band remains unchanged. The bandwidth of the reception/transmission branch filter in the microwave broadband duplexer is widened, so that the receiver can select a frequency in the bandwidth of the entire reception band to receive signals.

In the present embodiment, the broadband duplexer with the circulator is used to replace the sub-band (narrowband) duplexer. The circulator plays a role in isolation compensation, and provides an isolation of at least from 20 to 30 dB. The multiple-selection microwave transmission band-pass filter set is used in a transmitter channel. The multiple-selection microwave transmission band-pass filter set is formed by a plurality of band-pass filters, the bandwidth of which is narrowed as compared to the bandwidth of a single-channel microwave transmission broadband filter, and an out-of-band suppression of the band-pass filters with a narrowed bandwidth is improved. The reception/transmission bandwidth of the single apparatus is widened, and thus when designing a microwave transceiver, each sub-band can include as many channels as possible, and the number of types of sub-bands (correspondingly, types of transceivers) can be reduced to one in the reception/transmission band. Apparatuses of the same model are provided for each reception/transmission band, which is of great significance for simplifying the complex raw material procurement, process flow, assembly test, ordering, shipping, engineering installation, spare parts and maintenance of products.

The solution of the present application will be described by several examples below.

### Example one

Fig. 15 is a schematic diagram of a point-to-point double-conversion microwave full sub-band transceiver implemented in Ku and Ka bands. On the basis of a conventional microwave transceiver and through modifications made to a duplexer and a filter in a transmission channel, for some frequency bands (for example, 15 G, 18 G, and 23 G), one microwave transceiver in the frequency band can be used to replace all conventional sub-band microwave transceivers in the reception/ transmission band.

As shown in Fig. 15, the full sub-band duplexer is equivalent to the microwave broadband duplexer in Fig. 7. In this example, the full sub-band duplexer includes a circulator with an isolation of 30dB, and the microwave transmission band-pass filter set has a one-of-four structure, i.e., the microwave transmission band-pass filter set includes four band-pass filters. For the descriptions about the microwave power amplifier, the microwave low noise amplifier, the microwave upconverter, the microwave transmission local oscillator, the microwave downconverter, and the microwave reception local oscillator, reference may be made to the descriptions in the above embodiments, and therefore they will not be repeated here.

In this example, a first transmission intermediate frequency amplifier, a first transmission intermediate frequency filter, an intermediate frequency upconverter, a transmission intermediate frequency local oscillator, a second transmission intermediate frequency filter, and a second transmission intermediate frequency amplifier in a transmitter are configured to perform double conversion on a reception signal, and a first reception intermediate frequency amplifier, a first reception intermediate frequency filter, an intermediate frequency downconverter, a reception intermediate frequency local oscillator, a second reception intermediate frequency filter, and a second reception intermediate frequency amplifier in a receiver are configured to perform double conversion on a reception signal. The first transmission intermediate frequency filter and the second transmission intermediate frequency filter in the transmitter may be regarded as the transmission intermediate frequency filters in the above embodiments, and the first reception intermediate frequency filter and the second reception intermediate frequency filter may be regarded as the reception intermediate frequency filters in the above embodiments.

### Example two

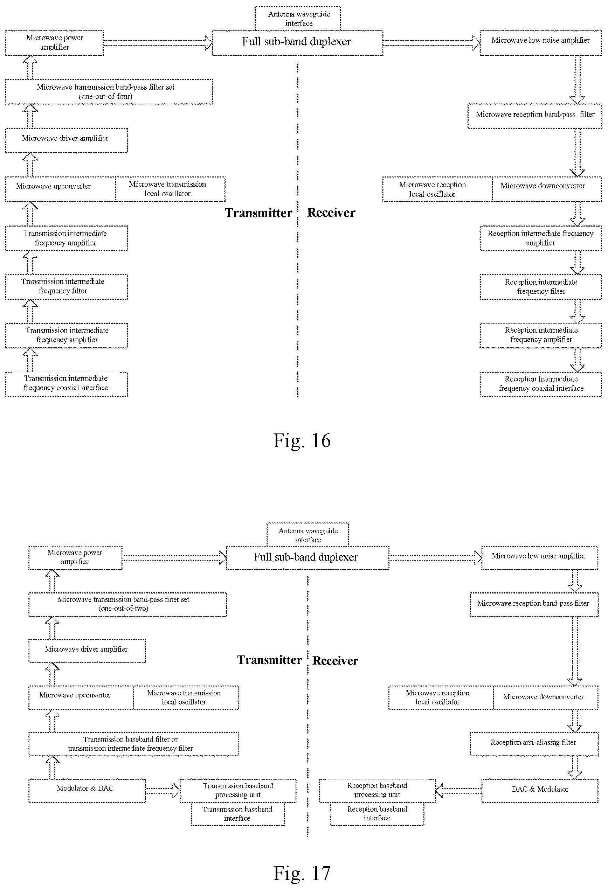

Fig. 16 is a schematic diagram of a point-to-point microwave full sub-band transceiver implemented in a low microwave band. This example is a common primary intermediate frequency architecture which is easily adopted by point-to-point microwaves in a low band and is generally used in a microwave band below a Ku band.

As shown in Fig. 16, the full sub-band duplexer is equivalent to the microwave broadband duplexer in Fig. 7. In this example, the full sub-band duplexer includes a circulator with an isolation of 30 dB, and the microwave transmission band-pass filter set has a one-of-four structure, i.e., the microwave transmission band-pass filter set includes four band-pass filters. For the descriptions about the microwave power amplifier, the microwave low noise amplifier, the microwave upconverter, the microwave transmission local oscillator, the microwave downconverter, the microwave reception local oscillator, the transmission intermediate frequency filter, and the reception intermediate frequency filter, reference may be made to the descriptions in the above embodiments, and they will not be repeated here.

### Example three

Fig. 17 is a schematic diagram of a zero-intermediate frequency/digital intermediate frequency microwave full sub-band transceiver. In this example, the transceiver does not have an intermediate frequency portion, and the functions of a transmission baseband filter and a reception anti-aliasing filter are respectively equivalent to the functions of the transmission intermediate frequency filter and the reception intermediate frequency filter in the above embodiments.

As shown in Fig. 17, the full sub-band duplexer is equivalent to the microwave broadband duplexer in Fig. 7. In this example, the full sub-band duplexer includes a circulator with an isolation of 20 dB, and the microwave transmission band-pass filter set has a one-of-two structure, i.e., the microwave transmission band-pass filter set includes two band-pass filters. For the descriptions of the microwave power amplifier, the microwave low noise amplifier, the microwave upconverter, the microwave transmission local oscillator, the microwave downconverter, and the microwave reception local oscillator, reference may be made to the descriptions in the above embodiments, and therefore they will not be repeated here.

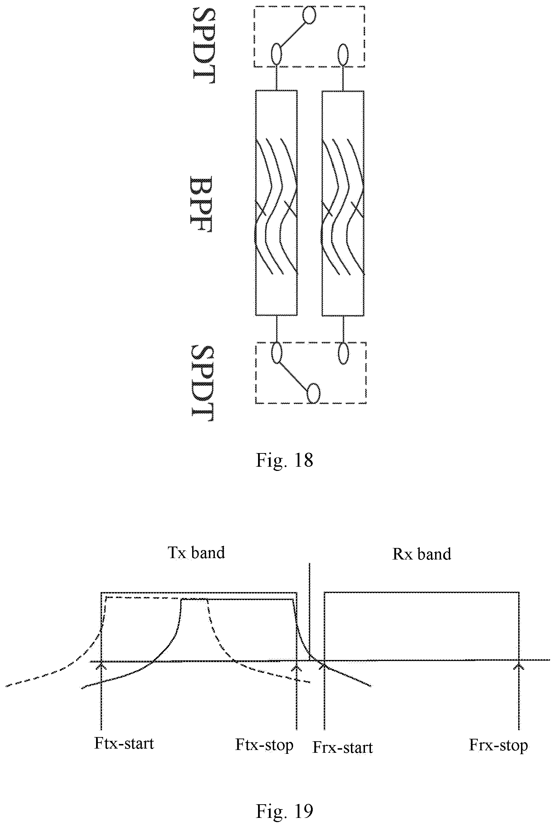

In this example, as shown in Fig. 18, there are two band-pass filters (BPF) in the microwave transmission band-pass filter set, one of the two band-pass filters being selected by two SPDT switches under the control of software.

In this example, as shown in Fig. 19, pass bands of the two band-pass filters in the microwave transmission band-pass filter set cover an entire transmission band. Compared with a single-channel microwave transmission broadband filter in a conventional microwave transmitter, a single-channel broadband band-pass filter with one original bandwidth equal to the transmission band is changed into narrowband band-pass filters with two bandwidths which are slightly larger than one-half of the bandwidth of the transmission band and have an overlapping area.

In the production and sales logistics processes of the microwave transceiver in the above examples, only one type of microwave transceiver needs to be managed for a certain reception/transmission band (only one type of peer apparatus communicating with the microwave transceiver (a transmission band and a reception band are interchanged) are needed), which greatly improves efficiency. Compared with a conventional sub-band microwave transceiver, one microwave transceiver provided in the present embodiment can replace various conventional sub-band microwave transceivers in a reception/transmission band, so as to respond to various changes or uncertain situations. Typically, the microwave transceiver provided in the present embodiment may also be suitable even if frequency points that users around the world apply for and are approved for use in the same reception/transmission band differ greatly.

In addition, an embodiment of the present application further provides a microwave broadband duplexer, including a circulator, a broadband transmission branch filter, and a broadband reception branch filter. The circulator is connected to the broadband transmission branch filter and the broadband reception branch filter. The broadband transmission branch filter is connected to a microwave transmission unit, and the broadband reception branch filter is connected to a microwave reception unit. The microwave transmission unit includes a microwave transmission band-pass filter set. The microwave transmission band-pass filter set includes a routing module and at least two band-pass filters. The routing module is respectively connected to the at least two band-pass filters and selects one band-pass filter to operate.

In an example embodiment, the microwave broadband duplexer may include a circulator, a broadband transmission branch filter, and a broadband receiver branch filter which are integrally assembled; alternatively, the microwave broadband duplexer may include a circulator, a broadband transmission branch filter, and a broadband reception branch filter which are separately provided, the circulator being respectively connected to the broadband transmission branch filter and the broadband reception branch filter through a port or a transmission line.

In an example embodiment, the circulator may include a first port, a second port, and a third port. The first port is connected to the broadband transmission branch filter, the second port is connected to an antenna, and the third port is connected to the broadband reception branch filter. A signal output from the first port is transmitted to and output from the second port, and a signal input from the second port is transmitted to and output from the third port.

In an example embodiment, a pass band of the broadband transmission branch filter may cover a bandwidth greater than a preset ratio in a transmission band of a microwave band, and a passband of the broadband reception branch filter may cover a bandwidth greater than a preset ratio in a reception band of the microwave band. Illustratively, a value of the preset ratio may be greater than or equal to 60% and less than 100%. However, the present application is not limited to this.

In an example embodiment, the pass band of the broadband transmission branch filter may cover the transmission band of the microwave band, and the pass band of the broadband reception branch filter may cover the reception band of the microwave band.

For the descriptions about the microwave broadband duplexer provided in the present embodiment, reference may be made to the descriptions in the above embodiments, and therefore they will not be repeated here.

## Claims

1. A microwave broadband duplexer, comprising:
a circulator, a broadband transmission branch filter, and a broadband reception branch filter,
the circulator being connected to the broadband transmission branch filter and the broadband reception branch filter, the broadband transmission branch filter being connected to a microwave transmission unit, and the broadband reception branch filter being connected to a microwave reception unit,
wherein the microwave transmission unit comprises a microwave transmission band-pass filter set, which comprises a routing module and at least two band-pass filters, the routing module being respectively connected to the at least two band-pass filters and selecting one of the at least two band-pass filters to operate.

2. The microwave broadband duplexer according to claim 1, wherein the microwave broadband duplexer comprises a circulator, a broadband transmission branch filter, and a broadband reception branch filter which are integrally assembled; or
wherein the microwave broadband duplexer comprises a circulator, a broadband transmission branch filter, and a broadband reception branch filter which are separately provided, wherein the circulator is respectively connected to the broadband transmission branch filter and the broadband reception branch filter through a port or a transmission line.

3. The microwave broadband duplexer according to claim 1, wherein a pass band of the broadband transmission branch filter covers a bandwidth greater than a preset ratio in a transmission band of a microwave band, and a pass band of the broadband reception branch filter covers a bandwidth greater than the preset ratio in a reception band of the microwave band.

4. The microwave broadband duplexer according to claim 3, wherein a value of the preset ratio is greater than or equal to 60% and less than 100%.

5. The microwave broadband duplexer according to claim 1, wherein a pass band of the broadband transmission branch filter covers a transmission band of a microwave band, and a pass band of the broadband reception branch filter covers a reception band of the microwave band.

6. A microwave transceiver apparatus, comprising:
a microwave broadband duplexer, a microwave transmission unit, and a microwave reception unit,
the microwave broadband duplexer comprising a circulator, a broadband transmission branch filter, and a broadband reception branch filter, the circulator being connected to the broadband transmission branch filter and the broadband reception branch filter, the broadband transmission branch filter being connected to the microwave transmission unit, the broadband reception branch filter being connected to the microwave reception unit, and
the microwave transmission unit comprising a microwave transmission band-pass filter set, which comprises a routing module and at least two band-pass filters, the routing module being respectively connected to the at least two band-pass filters and selecting one of the at least two band-pass filters to operate.

7. The microwave transceiver apparatus according to claim 6, wherein the microwave broadband duplexer comprises a circulator, a broadband transmission branch filter, and a broadband reception branch filter which are integrally assembled; or
wherein the microwave broadband duplexer comprises a circulator, a broadband transmission branch filter, and a broadband reception branch filter which are separately provided, wherein the circulator is respectively connected to the broadband transmission branch filter and the broadband reception branch filter through a port or a transmission line.

8. The microwave transceiver apparatus according to claim 6, wherein a pass band of the broadband transmission branch filter covers a bandwidth greater than a preset ratio in a transmission band of a microwave band, and a pass band of the broadband reception branch filter covers a bandwidth greater than the preset ratio in a reception band of the microwave band.

9. The microwave transceiver apparatus according to claim 8, wherein a value of the preset ratio is greater than or equal to 60% and less than 100%.

10. The microwave transceiver apparatus according to claim 6, wherein a pass band of the broadband transmission branch filter covers a transmission band of a microwave band, and a pass band of the broadband reception branch filter covers a reception band of the microwave band.

11. The microwave transceiver apparatus according to claim 6, wherein the routing module comprises a first routing unit and a second routing unit,
the first routing unit being connected to input ends of the at least two band-pass filters, and the second routing unit being connected to output ends of the at least two band-pass filters.

12. The microwave transceiver apparatus according to claim 11, wherein the first routing unit comprises one of the following: a multi-selection switch, a combination of single pole double throw switches, and a splitter ; and
wherein the second routing unit comprises one of the following: a multi-selection switch and a combination of single pole double throw switches.

13. The microwave transceiver apparatus according to claim 6, wherein a pass band of each of the band-pass filters respectively covers at least one channel within a transmission band of a microwave band, and a pass band of the microwave transmission band-pass filter set covers the transmission band of the microwave band.

14. The microwave transceiver apparatus according to claim 6, wherein the microwave transmission unit further comprises a microwave upconverter and a microwave power amplifier,
an output end of the microwave upconverter being connected to an input end of the microwave transmission band-pass filter set, an output end of the microwave transmission band-pass filter set being connected to an input end of the microwave power amplifier, an output end of the microwave power amplifier being connected to the broadband transmission branch filter.
